# EUROPEAN PATENT APPLICATION

(11) **EP 4 664 903 A1**
(43) Date of publication of application: **17.12.2025**
(21) Application number: 24860093.4
(22) Date of filing: 19.06.2024
(51) Int. Cl.: H04N 21/4402, H04N 21/4363, H04N 21/436, H04N 21/462, H04N 21/442, H04N 21/44, H04N 21/439, H04N 21/43

(54) **ELECTRONIC DEVICE AND CONTROL METHOD THEREFOR**

(30) Priority: 30.08.2023 KR 20230114544; 08.11.2023 KR 20230153494
(71) Applicant: Samsung Electronics Co., Ltd., Suwon-si, Gyeonggi-do 16677 (KR)
(72) Inventor: KANG, Wooseok, Suwon-si Gyeonggi-do 16677 (KR); KIM, Doohyun, Suwon-si Gyeonggi-do 16677 (KR); KIM, Minho, Suwon-si Gyeonggi-do 16677 (KR); YOO, Kiwon, Suwon-si Gyeonggi-do 16677 (KR); JI, Kumran, Suwon-si Gyeonggi-do 16677 (KR); CHOI, Bumkwi, Suwon-si Gyeonggi-do 16677 (KR)
(74) Representative: Appleyard Lees IP LLP
(86) International application number: PCT/KR2024/008464
(87) International publication number: WO 2025/048169

(57) **Abstract**

An electronic device includes a communication interface connected with a wireless network, a memory storing at least one instruction, and at least one processor that is connected with the communication interface and the memory and controls the electronic device. The at least one processor is configured to, by executing the at least one instruction, transmit a content to an external device in real time through the communication interface, and based on receiving transmission delay information from the external device, identify skip levels for each of a plurality of frames included in the content based on the received transmission delay information and characteristics of the content, encode the content based on the identified skip levels for each of the plurality of frames, and transmit the skip level information for each of the plurality of frames and the encoded content to the external device through the communication interface.

## Description

### [Technical Field]

The disclosure relates to an electronic device and a control method thereof, and more particularly, to an electronic device that transmits and receives images through a wireless network, and a control method thereof.

### [Background Art]

Spurred by the development of electronic technologies, electronic devices in various types are being developed and distributed. In particular, development and distribution of display devices such as TVs and mobile devices, etc. are actively going on.

Broadcasting and OTTs, cloud games, mirroring services, etc. are services in a form wherein an image stream that was compressively encoded is transmitted from a transmitter side to a receiver side, and is displayed to a user. The receiver side may receive input of data and requests from a user and transmit them to the transmitter side, and the transmitter side may provide services fittingly to the transmitted user data.

Meanwhile, compressive encoding performs bundle processing in units of groups of pictures (GOPs) wherein dependency exists among frames, and accordingly, when a delay occurs, a previous content may be dumped on a time point when a new GOP starts, and a new content may be decoded and displayed. Accordingly, delays are accumulated until at least one GOP ends, and there is a possibility that a big delay may occur. If a GOP is set to be small, accumulation of delays may be reduced, but as an intra frame which is a start of a GOP is generated frequently, degradation of the image quality may be generated, and if a GOP is set to be big, a content may be discontinued in a situation wherein a content in which delays are accumulated is dumped and a new GOP is displayed, and thus the service quality may be damaged. Here, a GOP may mean a unit of image data wherein prior and posterior image data of a few frames is used as one bundle.

### [Disclosure]

### [Technical Solution]

An electronic device according to one or more embodiments of the disclosure includes a communication interface connectable with a wireless network, a memory storing at least one instruction, and at least one processor configured to, by executing the at least one instruction, transmit a content to an external device in real time through the wireless network via the communication interface, and based on transmission delay information received from the external device and characteristics of the content, identify skip levels for each of a plurality of frames included in the content, encode the content based on the identified skip levels for each of the plurality of frames, and transmit skip level information for each of the plurality of frames and the encoded content to the external device through the wireless network via the communication interface.

According to one or more embodiments, the at least one processor may, by executing the at least one instruction, based on identifying a skippable frame among the plurality of frames included in the content, encode the content such that the identified skippable frame is skippable at a time of decoding at the external device, and transmit the encoded content, with the skip level information included in an area of each of the plurality of frames, to the external device through the wireless network via the communication interface.

According to one or more embodiments, the at least one processor may, by executing the at least one instruction, based on identifying a skippable frame among the plurality of frames included in the content, encode the content while excluding the identified skippable frame from a reference frame.

According to one or more embodiments, the at least one processor may, by executing the at least one instruction, based on the content being an audio content, identify the skip levels for each of the plurality of frames based on at least one of data continuity, a content type, or a sound size, and based on the content being a video content, identify the skip levels for each of the plurality of frames based on at least one of a scene change, a content type, a motion size, or a framerate.

According to one or more embodiments, the at least one processor may, by executing the at least one instruction, based on identifying that the content is a first type content, identify the skip levels for each of the plurality of frames such that a number of skippable frames becomes greater than or equal to a threshold number, and based on identifying that the content is a second type content, identify the skip levels for each of the plurality of frames such that the number of skippable frames becomes smaller than the threshold number.

According to one or more embodiments, the at least one processor may, by executing the at least one instruction, based on the electronic device and the external device being in a situation of 1:1 transmission and reception, encode the content while skipping skippable frames based on the identified skip levels for each of the plurality of frames, and based on the electronic device and the external device being in a situation of 1:N transmission and reception, where N is greater than 1, encode the content such that skippable frames are skippable at a time of decoding at the external device based on the identified skip levels for each of the plurality of frames.

According to one or more embodiments, an electronic device includes a communication interface connectable with a wireless network, a memory storing at least one instruction, and at least one processor configured to, by executing the at least one instruction, receive a content from an external device in real time through the wireless network via the communication interface, decode the received content, transmit transmission delay information to the external device based on a decoding delay state of the received content, and based on receiving, through the wireless network via the communication interface, the content including skip level information for each of a plurality of frames identified based on the transmitted transmission delay information and characteristics of the content, decode the received content including the skip level information for each of the plurality of frames based on the identified skip level information for each of the plurality of frames.

According to one or more embodiments, the at least one processor may, by executing the at least one instruction, identify whether frame skipping is necessary by monitoring a number of frames where decoding was delayed, and based on determining that frame skipping is needed, identify a skippable frame based on the skip level information for each of the plurality of frames, and decode the received content including the skip level information for each of the plurality of frames while skipping the identified skippable frame.

According to one or more embodiments, the at least one processor may, by executing the at least one instruction, based on identifying that a skippable frame is additionally needed based on a number of the frames where decoding was delayed and the skip level information for each of the plurality of frames, transmit transmission delay information additionally requesting a skippable frame to the external device.

According to one or more embodiments, the at least one processor may, by executing the at least one instruction, based on the skip level information for each of the plurality of frames, and synchronization of an audio content and a video content, identify an audio frame and a video frame to be ultimately skipped, and decode the received content including the skip level information for each of the plurality of frames while skipping the identified audio frame and the identified video frame.

According to one or more embodiments, a control method of an electronic device includes the steps of transmitting a content to an external device in real time through a wireless network, and based on transmission delay information received from the external device and characteristics of the content, identifying skip levels for each of a plurality of frames included in the content, encoding the content based on the identified skip levels for each of the plurality of frames, and transmitting the skip level information for each of the plurality of frames and the encoded content to the external device through the wireless network.

According to one or more embodiments, a control method of an electronic device includes the steps of receiving a content from an external device in real time through a wireless network and decoding the content, transmitting transmission delay information to the external device based on a decoding delay state of the content, and based on receiving the content including the transmission delay information and skip level information for each of a plurality of frames identified based on characteristics of the content, decoding the received content based on the identified skip level information for each of the plurality of frames.

According to one or more embodiments, in a non-transitory computer-readable medium storing computer instructions that, when executed by a processor of an electronic device, cause the electronic device to perform operations including transmitting a content to an external device in real time through a wireless network, and based on transmission delay information received from the external device and characteristics of the content, identifying skip levels for each of a plurality of frames included in the content, encoding the content based on the identified skip levels for each of the plurality of frames, and transmitting the skip level information for each of the plurality of frames and the encoded content to the external device through the wireless network.

According to one or more embodiments, in a non-transitory computer-readable medium storing computer instructions that, when executed by a processor of an electronic device, cause the electronic device to perform operations including receiving a content from an external device in real time through a wireless network and decoding the content, transmitting transmission delay information to the external device based on a decoding delay state of the content, and based on receiving the content including the transmission delay information and skip level information for each of a plurality of frames identified based on characteristics of the content, decoding the received content based on the identified skip level information for each of the plurality of frames.

### [BRIEF DESCRIPTION OF THE DRAWINGS]

The above-described and other aspects, characteristics, and advantages of specific embodiments of the disclosure will become clearer from the following description described with reference to the accompanying drawings.
FIG. 1 is a diagram for illustrating an implementation example of an electronic system according to one or more embodiments of the disclosure;
FIG. 2 is a block diagram illustrating a configuration of an electronic device 100 according to one or more embodiments of the disclosure;
FIG. 3 is a flow chart for illustrating a control method of an electronic device 100 according to one or more embodiments of the disclosure;
FIG. 4 is a flow chart for illustrating a control method of an electronic device 100 according to one or more embodiments of the disclosure;
FIG. 5A is a diagram for illustrating a method of identifying skip levels for each frame according to one or more embodiments of the disclosure;
FIG. 5B is a diagram for illustrating a method of identifying skip levels for each frame according to one or more embodiments of the disclosure;
FIG. 5C is a diagram for illustrating a method of identifying skip levels for each frame according to one or more embodiments of the disclosure;
FIG. 6 is a flow chart for illustrating a control method of an electronic device 100 according to one or more embodiments of the disclosure;
FIG. 7 is a flow chart for illustrating a control method of an electronic device 100 according to one or more embodiments of the disclosure;
FIG. 8A is a block diagram illustrating in detail a configuration of an electronic device 200 according to one or more embodiments of the disclosure;
FIG. 8B is a block diagram for illustrating a detailed configuration of an electronic device 200 according to one or more embodiments of the disclosure;
FIG. 9 is a flow chart for illustrating a control method of an electronic device 200 according to one or more embodiments of the disclosure;
FIG. 10 is a flow chart for illustrating a control method of an electronic device 200 according to one or more embodiments of the disclosure;
FIG. 11 is a flow chart for illustrating a control method of an electronic device 200 according to one or more embodiments of the disclosure;
FIG. 12 is a diagram for illustrating an operation between a transmission device 100 and a reception device 200 according to one or more embodiments of the disclosure;
FIG. 13 is a diagram for illustrating an operation in a unicast mode according to one or more embodiments of the disclosure;
FIG. 14 is a diagram for illustrating an operation in a multicast mode according to one or more embodiments of the disclosure;
FIG. 15A is a diagram for illustrating a method of identifying a compression mode according to one or more embodiments of the disclosure;
FIG. 15B is a diagram for illustrating a method of identifying a compression mode according to one or more embodiments of the disclosure;
FIG. 15C is a diagram for illustrating a method of identifying a compression mode according to one or more embodiments of the disclosure; and
FIG. 15D is a diagram for illustrating a method of identifying a compression mode according to one or more embodiments of the disclosure.

### [Detailed Description of Exemplary Embodiments]

First, terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numerical values, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including only A, (2) including only B, or (3) including both A and B. As an additional example, the expression "at least one of A, B, or C" may refer to all of the following cases: (1) including only A, (2) including only B, (3) including only C, (4) including A and B, (5) including A and C, (6) including B and C, (7) including A, B, C.

Further, the expressions "first," "second," and the like used in this specification may be used to describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

In addition, singular expressions include plural expressions, unless defined obviously differently in the context. Further, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Also, in the embodiments of the disclosure, "a module" or "a part" performs at least one function or operation, and may be implemented as hardware or software, or as a combination of hardware and software. Further, a plurality of "modules" or "parts" may be integrated into at least one module and implemented as at least one processor (not shown), except "modules" or "parts" which need to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, one or more embodiments of the disclosure will be described in more detail with reference to the accompanying drawings.

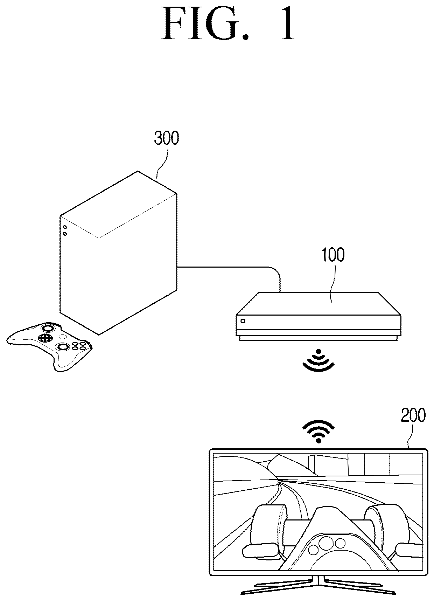

FIG. 1 is a diagram for illustrating an implementation example of an electronic system according to one or more embodiments of the disclosure.

According to FIG. 1, an electronic system may include a transmission device 100, a reception device 200, and a source device 300.

The source device 300 is a device that provides contents, and can be implemented as a server, a game machine, a PC, etc. According to one or more embodiments, the transmission device 100 may provide a real time image streaming service, and the real time image streaming service may include a live broadcasting service, a cloud game service, a mirroring service, a video communication service, etc.

The transmission device 100 may be implemented as a set-top box or a one connected (oc) box as illustrated in FIG. 1, but is not limited thereto, and any device equipped with image processing and communication functions can be applied without limitation.

The reception device 200 may be implemented as a TV as illustrated in FIG. 1, but is not limited thereto, and any device equipped with a communication function and a display function such as a monitor, a smartphone, a tablet PC, a laptop PC, a head mounted display (HMD), a near eye display (NED), a large format display (LFD), digital signage, a digital information display (DID), a video wall, a projector display, etc. can be applied without limitation.

The reception device 200 may receive a content from the transmission device 100. For example, a content may include at least one of a video content or an audio content. For example, in the case of a video content, various compression images or images of various resolutions can be received. For example, the reception device 200 may receive an image in a compressed form such as moving picture experts group (MPEG) (e.g., MP2, MP4, MP7, etc.), joint photographic coding experts group (JPEG), advanced video coding (AVC), H.264, H.265, high efficiency video codec (HEVC), etc. Alternatively, the electronic device 100 may receive any one image among a standard definition (SD) image, a high definition (HD) image, a full HD image, an ultra HD image, or an image of a higher resolution than them, etc.

According to one or more embodiments, the transmission device 100 and the reception device 200 may perform communication through a wireless network. For example, the transmission device 100 may compress an image signal received from the source device 300 and insert necessary information into a header, and transmit the signal to the reception device 200 through a wireless network.

Meanwhile, in a wireless network wherein a streaming service is provided, a degradation situation such as temporary transmission failure or bandwidth reduction may occur. If a network degradation situation occurs in a real time streaming service, transmission delays are accumulated, and the real time service cannot be performed properly. Accordingly, when a transmission delay occurs, accumulation of delays should be prevented by dumping contents as much as the delay and servicing a new content.

Accordingly, hereinafter, various embodiments for minimizing transmission delays in a low-delay streaming service such as real time streaming while maintaining the quality according to the network state and characteristics of a content, and when a delay occurs, restoring to a minimum delay situation within the quickest time possible will be explained.

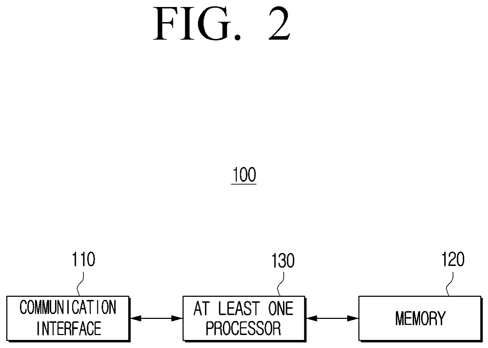

FIG. 2 is a block diagram illustrating a configuration of an electronic device 100 according to one or more embodiments of the disclosure.

According to one or more embodiments, the electronic device 100 may be implemented as the transmission device 100 illustrated in FIG. 1. For example, the electronic device 100 may be implemented as a set-top box or a one connected (oc) box, but is not limited thereto, and any device equipped with image processing and communication functions can be applied without limitation.

According to FIG. 2, the electronic device 100 includes a communication interface 110, a memory 120, and at least one processor 130.

The communication interface 110 can obviously be implemented as various interfaces depending on implementation examples of the electronic device 100. For example, the communication interface 110 may support wireless communication such as Bluetooth, Wi-Fi based on AP (Wi-Fi, a wireless LAN network), Zigbee, a wireless local area network (LAN), a wide area network (WAN), etc. However, the disclosure is not limited thereto, and the communication interface 110 may support wired communication such as Ethernet, a high-definition multimedia interface (HDMI), a universal serial bus (USB), a mobile high-definition link (MHL), Audio Engineering Society/European Broadcasting Union (AES/EBU), optical, coaxial, etc. According to one or more embodiments, the communication interface 110 may perform communication with another electronic device, an external server and/or a remote control device, etc.

The memory 120 may store data necessary for the various embodiments of the disclosure. The memory 120 may be implemented in a form of a memory embedded in the electronic device 100, or implemented in the form of a memory that can be attached to or detached from the electronic device 100 according to the usage of stored data. For example, in the case of data for operating the electronic device 100, the data may be stored in a memory embedded in the electronic device 100, and in the case of data for an extended function of the electronic device 100, the data may be stored in a memory that can be attached to or detached from the electronic device 100. Meanwhile, in the case of a memory embedded in the electronic device 100, the memory may be implemented as at least one of a volatile memory (e.g.: a dynamic RAM (DRAM), a static RAM (SRAM), or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive, or a solid state drive (SSD)). Also, in the case of a memory that can be attached to or detached from the electronic device 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and an external memory that can be connected to a USB port (e.g., a USB memory), etc.

The at least one processor 130 controls the overall operations of the electronic device 100. Specifically, the at least one processor 130 may be connected with each component of the electronic device 100, and control the overall operations of the electronic device 100. For example, the at least one processor 130 may be electrically connected with the display 130 and the memory 120, and control the overall operations of the electronic device 100. The processor 130 may consist of one or a plurality of processors.

The at least one processor 130 may perform the operations of the electronic device 100 according to the various embodiments by executing one or more instructions stored in the memory 120.

The at least one processor 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 130 may control one or a random combination of the other components of the electronic device, and perform an operation related to communication or data processing. Also, the at least one processor 130 may execute one or more programs or instructions stored in the memory. For example, the at least one processor 130 may perform the method according to one or more embodiments of the disclosure by executing the one or more instructions stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 130 may be implemented as a single core processor including one core, or may be implemented as one or more multicore processors including a plurality of cores (e.g., multicores of the same kind or multicores of different kinds). In case the at least one processor 130 is implemented as multicore processors, each of the plurality of cores included in the multicore processors may include an internal memory of the processor such as a cache memory, an on-chip memory, etc., and a common cache shared by the plurality of cores may be included in the multicore processors. Also, each of the plurality of cores (or some of the plurality of cores) included in the multicore processors may independently read a program instruction for implementing the method according one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be implemented by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto. Hereinafter, the at least one processor 130 will be referred to as the processor 130, for the convenience of explanation.

According to one or more embodiments, the processor 130 may transmit a content to an external device in real time through the communication interface 110. For example, a content may include at least one of a video content or an audio content.

According to one or more embodiments, if transmission delay information is received from an external device (e.g., FIG. 1, 200), the processor 130 may identify skip levels for each of a plurality of frames included in the content based on the received transmission delay information and characteristics of the content.

For example, the transmission delay information is information on delays according to degradation of a wireless network, and it may include the number of delayed frames. For example, the number of delayed frames may include at least one of the number of audio delayed frames or the number of video delayed frames. However, the disclosure is not limited thereto, and the transmission delay information may be level information wherein the number of delayed frames has become graded. That is, the transmission delay information may be information in various forms that can indicate a low-delay request of a content.

For example, characteristics of a content may vary according to whether the content is an audio content or a video content. For example, in the case of an audio content, the characteristics of the content may include at least one of data continuity, a content type, or a sound size. Also, in the case of a video content, the characteristics of the content may include at least one of a scene change, a content type, a motion size, or a framerate. Here, a content type may indicate not only a provision form of a content such as a real time streaming content and an OTT (a content type) content, but also a genre of a content such as a game content and a movie content. Also, in one game content, there may be a part wherein low-delay is requested as a user directly plays the part (i.e., a part that cannot be skipped) and a part wherein appreciation is mainly done and low-delay is not requested (i.e., a part that can be skipped), and thus it may be determined whether a frame can be skipped for each chapter or scene.

For example, in case a content is an audio content, the processor 130 may identify skip levels for each of a plurality of frames based on at least one of data continuity, a content type, or a sound size. Also, in case a content is a video content, the processor 130 may identify skip levels for each of a plurality of frames based on at least one of a scene change, a content type, a motion size, or a framerate.

For example, in case it is identified that a content is a first type content, the processor 130 may identify skip levels for each of a plurality of frames such that the number of skippable frames becomes greater than or equal to a threshold number. For example, the first type content may be a content for which the degree of a low-delay request is high such as a game content.

For example, in case it is identified that a content is a second type content, the processor 130 may identify skip levels for each of a plurality of frames such that the number of skippable frames becomes smaller than the threshold number. For example, the second type content may be a content for which the degree of a low-delay request is low such as a movie content.

According to one or more embodiments, skip levels for each of a plurality of frames may be information indicating whether a frame can be skipped at the time of decoding at the reception device 200. For example, a skip level may have a value of "1" if a frame can be skipped, and have a value of "0" if a frame cannot be skipped, but the disclosure is not necessarily limited thereto. For example, the skip levels can be indicated as different numerical values according to the priorities even when a frame can be skipped.

According to one or more embodiments, the processor 130 may encode a content based on identified skip levels for each of a plurality of frames. For example, if a skippable frame is identified among a plurality of frames included in a content, the processor 130 may encode the content such that the identified frame can be skipped at the time of decoding. For example, if a skippable frame among a plurality of frames included in a content is identified, the processor 130 may encode the content while excluding the identified frame from a reference frame. Here, the reference frame may be a frame that becomes a standard when performing a block matching algorithm for assuming a movement when compressing a moving image. That is, the processor 130 may encode a content such that a skippable frame is excluded from a reference frame, and can thereby prevent generation of a problem in assuming a movement even if the frame is skipped at the time of decoding.

According to one or more embodiments, the processor 130 may transmit skip level information (or skip flags) for each of a plurality of frames and an encoded content to the reception device 200 through the communication interface 110. For example, skip level information indicating whether each of the plurality of frames can be skipped may be included in an area of each of the plurality of frames. For example, the skip level information may be included in a header area of a compression image packet corresponding to each of the plurality of frames. Other than this, image information such as an image size, an image compression rate, etc. may be included in a header area of a compression image packet corresponding to each of the plurality of frames.

According to one or more embodiments, the processor 130 may control encoding based on a streaming mode.

According to one or more embodiments, in case the electronic device 100 and the reception device 200 are in a 1:1 transmission and reception mode (e.g., a unicast mode), the processor 130 may encode a content while skipping skippable frames based on identified skip levels for each of a plurality of frames. For example, the processor 130 may control the encoder to perform encoding by directly performing frame skipping based on the number of delayed frames included in the transmission delay information. For example, in case the current streaming mode is a unicast mode, performing skipping at the encoder can reduce the transmission amount and reduce the task of the decoder.

According to one or more embodiments, in case the electronic device 100 and the reception device 200 are in a 1:N transmission (N is greater than 1) and reception mode (e.g., a multicast mode/a broadcast mode), the processor 130 may encode a content such that skippable frames can be skipped at the time of decoding at the reception device 200 based on identified skip levels for each of a plurality of frames. For example, the processor 130 may set the skip levels for each frame such that frames as many as the number of delayed frames included in the transmission delay information can be skipped at the decoder. For example, selection of skipping at the encoder is possible in the multicast/the broadcast mode, but there may be another client device that does not need skipping, and thus it may be advantageous for the overall quality to perform skipping at the decoder. For example, in case a plurality of frames are set as skippable levels, consecutive frames or non-consecutive frames may be set as skippable levels.

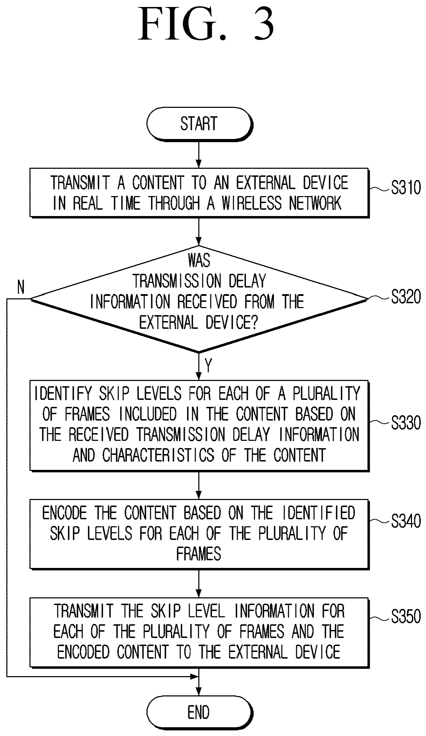

FIG. 3 is a flow chart for illustrating a control method of the electronic device 100 according to one or more embodiments of the disclosure.

According to FIG. 3, the electronic device 100 may transmit a content to the reception device 200 in real time through a wireless network in operation S310.

Then, the electronic device 100 may identify whether transmission delay information is received from the reception device 200 in operation S320.

If transmission delay information is received from the reception device 200 in operation S320:Y, the electronic device 100 may identify skip levels for each of a plurality of frames included in the content based on the received transmission delay information and characteristics of the content in operation S330.

Then, the electronic device 100 may encode the content based on the identified skip levels for each of the plurality of frames in operation S340.

Then, the electronic device 100 may transmit the skip level information for each of the plurality of frames and the encoded content to an external device in operation S350.

Meanwhile, in FIG. 3, orders were mapped for all steps for the convenience of explanation, but it is obvious that the orders of steps that are regardless of orders or that can be performed in parallel are not necessarily limited to the orders.

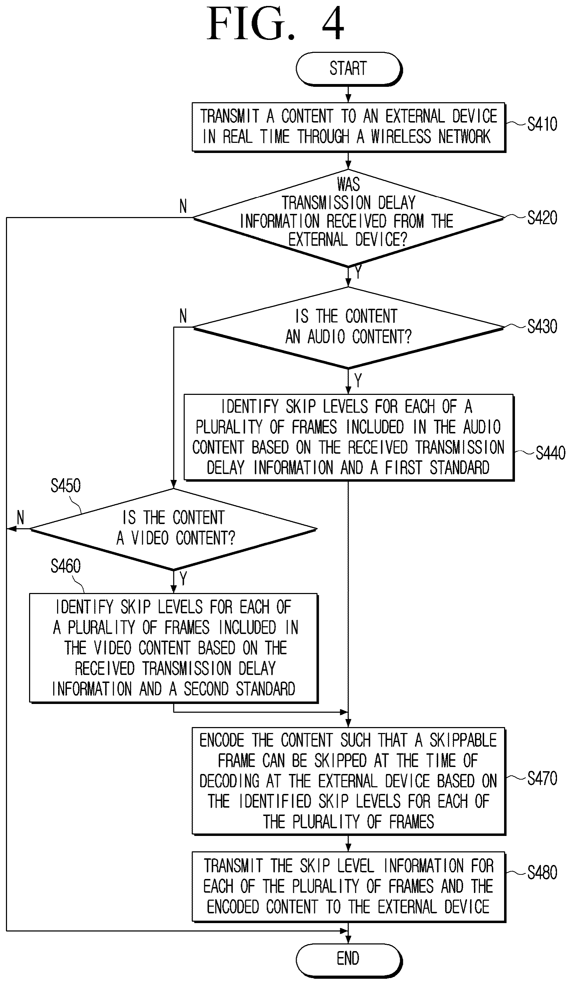

FIG. 4 is a flow chart for illustrating a control method of the electronic device 100 according to one or more embodiments of the disclosure.

According to FIG. 4, the electronic device 100 may transmit a content to the transmission device 100 in real time through a wireless network in operation S410.

Then, the electronic device 100 may identify whether transmission delay information is received from the reception device 200 in operation S420.

If transmission delay information is received from the reception device 200 in operation S420:Y, the electronic device 100 may identify whether the content is an audio content in operation S430.

If it is identified that the content is an audio content in operation S430:Y, the electronic device 100 may identify skip levels for each of a plurality of frames included in the audio content based on the received transmission delay information and a first standard in operation S440. For example, the first standard may include at least one of data continuity, a content type, or a sound size.

If it is identified that the content is not an audio content in operation S430:N, the electronic device 100 may identify whether the content is a video content in operation S450.

If it is identified that the content is a video content in operation S450:Y, the electronic device 100 may identify skip levels for each of a plurality of frames included in the video content based on the received transmission delay information and a second standard in operation S460. For example, the second standard may include at least one of a scene change, a content type, a motion size, or a framerate.

Then, the electronic device 100 may encode the content such that skippable frames can be skipped at the time of decoding at the reception device 200 based on the identified skip levels for each of the plurality of frames in operation S470.

Then, the electronic device 100 may transmit the skip level information for each of the plurality of frames and the encoded content to the reception device 200 in operation S480.

Meanwhile, in FIG. 4, orders were mapped for all steps for the convenience of explanation, but it is obvious that the orders of steps that are regardless of orders or that can be performed in parallel are not necessarily limited to the orders.

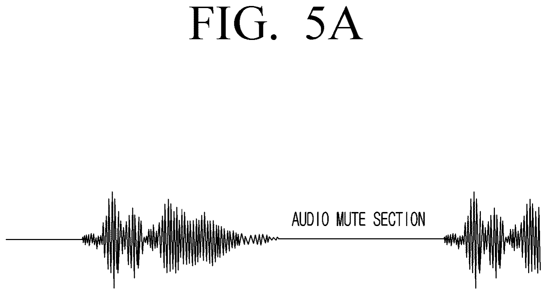

FIG. 5A to FIG. 5C are diagrams for illustrating a method of identifying skip levels for each frame according to one or more embodiments of the disclosure.

According to one or more embodiments, in case a content is an audio content, the electronic device 100 may identify skip levels for each frame based on at least one of data continuity, a content type, or a sound size.

For example, as illustrated in FIG. 5A, the electronic device 100 may identify that a frame corresponding to a mute section in an audio content is skippable. For example, the electronic device 100 may set a frame that was identified to be skippable as a skippable level, and encode the content while excluding the frame from a reference frame such that it can be skipped at the time of decoding.

According to one or more embodiments, in case a content is a video content, the electronic device 100 may identify skip levels for each frame based on at least one of a scene change, a content type, a motion size, or a framerate. In this case, the reception device 200 may determine whether to skip a frame at the time of decoding based on the skip levels for each frame.

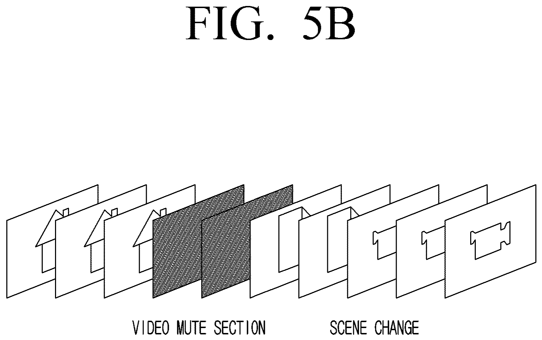

For example, as illustrated in FIG. 5B, the electronic device 100 may identify that a frame corresponding to a mute section in a video content is skippable, or identify that a frame corresponding to a section wherein a scene change is big is not skippable. For example, the electronic device 100 may set a frame that was identified to be skippable as a skippable level, and encode the content while excluding the frame from a reference frame such that it can be skipped at the time of decoding. Also, the electronic device 100 may set a frame that was identified to be not skippable as an unskippable level.

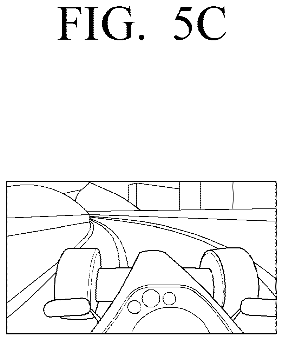

For example, as illustrated in FIG. 5C, the electronic device 100 may identify that a frame corresponding to a section wherein a motion size is big in a video content is not skippable. Also, the electronic device 100 may set a frame that was identified to be not skippable as an unskippable level.

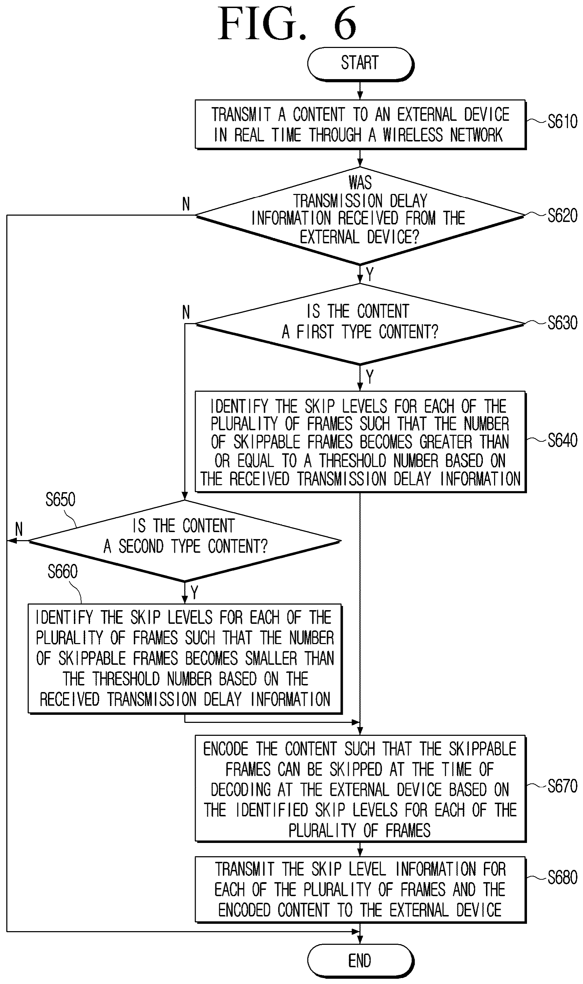

FIG. 6 is a flow chart for illustrating a control method of the electronic device 100 according to one or more embodiments of the disclosure.

According to FIG. 6, the electronic device 100 may transmit a content to the reception device 200 in real time through a wireless network in operation S610.

If transmission delay information is received from the reception device 200 in operation S620, the electronic device 100 may identify whether the content is a first type content in operation S630.

If it is identified that the content is the first type content in operation S630:Y, the electronic device 100 may identify the skip levels for each of the plurality of frames such that the number of skippable frames becomes greater than or equal to a threshold number based on the received transmission delay information in operation S640. For example, the first type content may be a content for which the degree of a low-delay request is high such as a game content. In this case, the electronic device 100 may make frames as many as possible skipped at the time of decoding, and can thereby prevent generation of low-delay according to degradation of the network. For example, the electronic device 100 may identify skip levels for each frame such that frames as many as possible are skipped at the time of decoding based on the number of delayed framed included in the transmission delay information.

If it is identified that the content is not the first type content in operation S630:N, the electronic device 100 may identify whether the content is a second type content in operation S650.

If it is identified that the content is the second type content in operation S650:Y, the electronic device 100 may identify skip levels for each of the plurality of frames such that the number of skippable frames becomes smaller than the threshold number based on the received transmission delay information in operation S660. For example, the second type content may be a content for which the degree of a low-delay request is low such as a movie content. As this is a case wherein low-delay can be allowed, the electronic device 100 may make frames as few as possible skipped at the time decoding.

Then, the electronic device 100 may encode the content such that the skippable frames can be skipped at the time of decoding at the reception device 200 based on the identified skip levels for each of the plurality of frames in operation S670. For example, the electronic device 100 may encode the content such that the skippable frames are not included in a reference frame.

Then, the electronic device 100 may transmit the skip level information for each of the plurality of frames and the encoded content to the reception device 200 in operation S680.

Meanwhile, in FIG. 6, orders were mapped for all steps for the convenience of explanation, but it is obvious that the orders of steps that are regardless of orders or that can be performed in parallel are not necessarily limited to the orders.

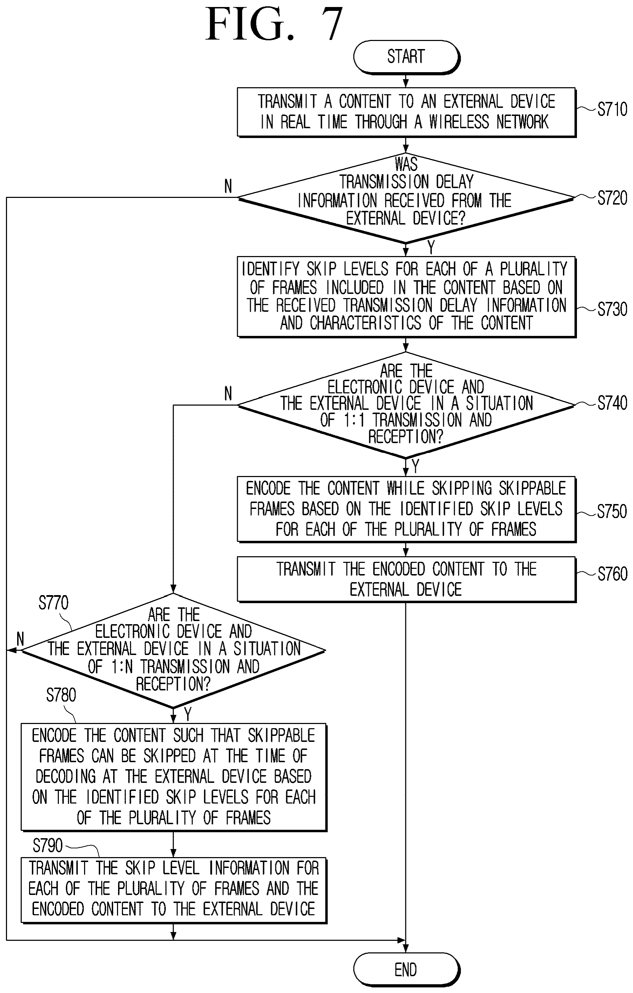

FIG. 7 is a flow chart for illustrating a control method of the electronic device 100 according to one or more embodiments of the disclosure.

According to FIG. 7, the electronic device 100 may transmit a content to the reception device 200 in real time through a wireless network in operation S710.

If transmission delay information is received from the reception device 200 in operation S720:Y, the electronic device 100 may identify the skip levels for each of a plurality of frames included in the content based on the received transmission delay information and characteristics of the content in operation S730.

Then, if it is identified that the electronic device 100 and the reception device 200 are in a situation of 1:1 transmission and reception in operation S740:Y, the electronic device 100 may encode the content while skipping skippable frames based on the identified skip levels for each of the plurality of frames in operation S750.

Then, the electronic device 100 may transmit the encoded content to the reception device 200 in operation S760.

Meanwhile, if it is identified that the electronic device 100 and the reception device 200 are not in a situation of 1:1 transmission and reception, the electronic device 100 may identify whether the electronic device 100 and the reception device 200 are in a situation of 1:N transmission and reception in operation S770.

If it is identified that the electronic device 100 and the external device 200 are in a situation of 1:N transmission and reception in operation S770:Y, the electronic device 100 may encode the content such that skippable frames can be skipped at the time of decoding at the external device based on the identified skip levels for each of the plurality of frames in operation S780.

Then, the electronic device 100 may transmit the skip level information for each of the plurality of frames and the encoded content to the reception device 200 in operation S790.

Meanwhile, in FIG. 7, orders were mapped for all steps for the convenience of explanation, but it is obvious that the orders of steps that are regardless of orders or that can be performed in parallel are not necessarily limited to the orders.

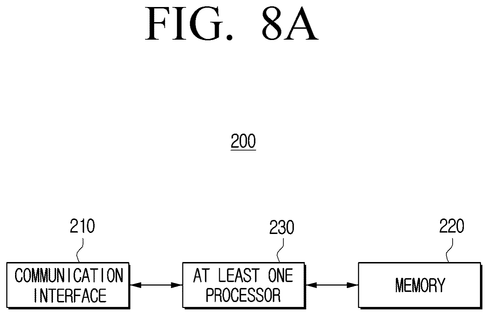

FIG. 8A is a block diagram illustrating in detail a configuration of an electronic device 200 according to one or more embodiments of the disclosure.

According to one or more embodiments, the electronic device 200 may be implemented as the reception device 200 illustrated in FIG. 1. For example, the electronic device 200 may be implemented as a TV, but is not limited thereto, and any device equipped with communication and display functions such as a monitor, a smartphone, a tablet PC, a laptop PC, a head mounted display (HMD), a near eye display (NED), a large format display (LFD), digital signage, a digital information display (DID), a video wall, a projector display, etc. can be applied without limitation.

According to FIG. 8A, the electronic device 200 includes a communication interface 210, a memory 220, and at least one processor 230. As implementation examples of the communication interface 210, the memory 220, and the at least one processor 230 are identical/similar to those of the communication interface 110, the memory 120, and the at least one processor 130 illustrated in FIG. 2, detailed explanation will be omitted.

According to one or more embodiments, the processor 230 may receive a content from the transmission device 100 in real time through the communication interface 210, and decode the content.

According to one or more embodiments, the processor 230 may transmit transmission delay information to the transmission device 100 based on a decoding delay state of the content.

According to one or more embodiments, if a content including skip level information for each of a plurality of frames identified based on transmission delay information and characteristics of the content is received, the processor 230 may decode the received content based on the identified skip level information for each of the plurality of frames. According to one or more embodiments, the skip levels for each of the plurality of frames may be information indicating whether the frames can be skipped at the time of decoding. For example, a skip level may have a value of "1" in case a frame can be skipped, and may have a value of "0" in case a frame cannot be skipped, but is not necessarily limited thereto. For example, skip levels may be indicated in different numerical values according to priorities even when frames can be skipped.

According to one or more embodiments, the processor 230 may identify whether frame skipping is necessary by monitoring the number of frames wherein decoding was delayed. If it is determined that frame skipping is necessary, the processor 230 may identify a skippable frame based on the skip level information for each of the plurality of frames, and decode the received content while skipping the identified frame.

For example, the processor 230 may identify the number of frames wherein decoding was delayed based on at least one of the state of a stream buffer wherein streams received from the transmission device 100 are stored or the state of an output buffer wherein frames output through the display 240 are stored.

According to one or more embodiments, the processor 230 may identify the number of frames wherein decoding was delayed based on an output mode. For example, the output mode may include at least one of a variable refresh rate (VRR) mode, a frame rate control (FRC) mode, or a normal mode.

According to one or more embodiments, if it is identified that a skippable frame is additionally needed based on the number of the frames wherein decoding was delayed and the skip level information for each of the plurality of frames, the processor 230 may transmit transmission delay information additionally requesting a skippable frame to the transmission device 100.

According to one or more embodiments, the processor 230 may identify an audio frame and a video frame to be ultimately skipped based on the skip level information for each of the plurality of frames, and synchronization of an audio content and a video content. Then, the processor 230 may decode the received content while skipping the identified audio frame and the identified video frame.

According to one or more embodiments, the processor 230 may calculate a decoding speed of the decoder and/or an output speed and/or an output sequence of the display 240 based on an output buffer state and an output mode, and control the decoder and/or the display 240 based on this.

According to one or more embodiments, if it is identified that streams stored in the stream buffer are smaller than a minimal threshold value in operation S430:Y, the processor 230 may control at least one of a frame output speed, a frame interpolation, or a repetitive frame output based on an output buffer state and an output mode in operation S440. Here, the output mode may include at least one of a variable refresh rate (VRR) mode, a frame rate control (FRC) mode, or a normal mode.

According to one or more embodiments, the processor 230 may ultimately identify transmission delay information to be requested to the transmission device 100 based on the number of frames wherein decoding was delayed and the network state information. Here, the network state information may include at least one of an available bandwidth of the network, a packet loss rate, a round-trip time of packets, a delay-gradient of packets, received signal strength indicator (RSSI) information, communication channel information, link speed information, channel interference information, or retrial rate information. That is, the network state information may be various kinds of information related to the network that are influenced by the complexity, the distance, and the transmission speed of the network. A round-trip time (or a round-trip delay) of the packets may mean the time that is spent for the packets to travel back and forth between the network and a receiving end. A delay-gradient of the packets may be a difference between an interval of transmission time of the packets transmitted from a transmitting end and an interval of reception time of the packets received at a receiving end. The communication channel information may include information on at least one of a channel or a frequency. The link speed information may be information on rates of packets that are transmitted from a transmitting end to a receiving end. The channel interference information may be obtained based on interference factors for each channel that were measured by using various channel RF parameters such as a channel active time, a channel busy time, and a channel transmission time, etc. The retrial rate information may indicate percentages of transmission packets that are retried in units of seconds.

The processor 230 may perform image processing including at least one of image enhancement, image restoration, image transformation, image analysis, or image understanding for a decoded frame depending on needs, and output the frame.

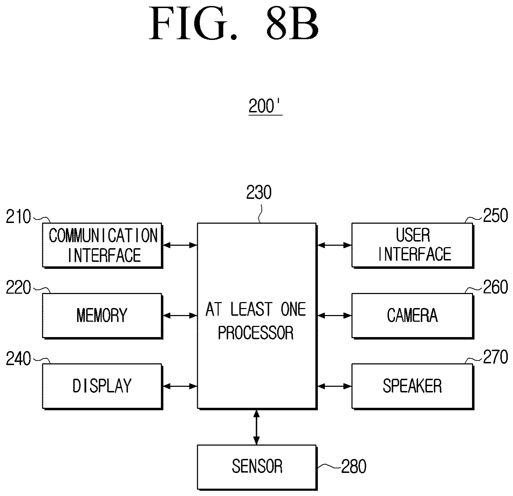

FIG. 8B is a block diagram for illustrating a detailed configuration of the electronic device 200 according to one or more embodiments of the disclosure.

According to FIG. 8B, the electronic device 200' may include a communication interface 210, a memory 220, at least one processor 230, a display 240, a user interface 250, a camera 260, a speaker 270, and a sensor 280. Among the components illustrated in FIG. 8B, regarding components that overlap with the components illustrated in FIG. 8A, detailed explanation will be omitted.

The display 240 may be implemented as a display including self-luminous elements, or a display including non-self-luminous elements and a backlight. For example, the display 240 may be implemented as displays in various forms such as a liquid crystal display (LCD), an organic light emitting diodes (OLED) display, light emitting diodes (LEDs), micro LEDs, mini LEDs, a plasma display panel (PDP), a quantum dot (QD) display, quantum dot light emitting diodes (QLEDs), etc. Inside the display 240, driving circuits that may be implemented in forms such as an a-si TFT, a low temperature poly silicon (LTPS) TFT, an organic TFT (OTFT), etc., and a backlight unit, etc. may also be included together. According to one or more embodiments, on the front surface of the display 240, a touch sensor that has a form such as a touch film, a touch sheet, a touch pad, etc. and detects a touch operation may be arranged and implemented to detect various types of touch inputs. For example, the display 240 may display various types of touch inputs such as a touch input by a user's hand, a touch input by an input device such as a stylus pen, a touch input by a specific electrostatic material, etc. Here, the input device may be implemented as an input device in a pen type that can be referred to as various terms such as an electronic pen, a stylus pen, an S-pen, etc. According to one or more embodiments, the display 240 may be implemented as a flat display, a curved display, a flexible display that can be folded and/or rolled, etc. Also, according to one or more embodiments, the processor 230 may display an obtained output image through the display 240.

According to one or more embodiments, the processor 230 may control the display 240 to output an image frame based on an image signal restored from a compressed image stream and a sync signal corresponding to the image frame. For example, the processor 230 may generate a Vsync signal based on an identified frame refresh rate, and output an image frame based on the generated Vsync signal.

The user interface 250 may be implemented as a device such as a button, a touch pad, a mouse, and a keyboard, or implemented as a touch screen that can perform the aforementioned display function and a manipulation input function together.

The camera 260 may be turned on according to a predetermined event and perform photographing. The camera 260 may convert a photographed image into an electric signal, and generate image data based on the converted signal. For example, a subject may be converted into an electric image signal through a semiconductor charge coupled device (CCD), and the image signal converted as such may be amplified and converted into a digital signal, and then go through signal processing. For example, the camera 260 may be implemented as a general camera, a stereo camera, a depth camera, etc.

The speaker 270 may be a feature that outputs not only various kinds of audio data but also various kinds of notification sounds or voice messages, etc. The processor 230 may control the speaker 270 to output feedbacks or various kinds of notifications according to various embodiments of the disclosure in audio forms.

The sensor 280 may include various types of sensors such as a touch sensor, a proximity sensor, an acceleration sensor (or a gravity sensor), a geomagnetic sensor, a gyro sensor, a pressure sensor, a location sensor, a distance sensor, an illumination sensor, etc.

Other than the above, the electronic device 200' may include a microphone (not shown), a tuner (not shown), and a demodulator (not shown), etc. depending on implementation examples.

The microphone (not shown) is a component for receiving inputs of user voices or other sounds and converting them into audio data. However, depending on implementation examples, the electronic device 200' may receive a user voice input through an external device through the communication interface 210.

The tuner (not shown) may receive a radio frequency (RF) broadcasting signal by tuning a channel selected by the user among RF broadcasting signals received through an antenna or all pre-stored channels.

The demodulator (not shown) may receive a digital IF (DIF) signal converted at the tuner and demodulate the signal, and perform channel demodulation, etc.

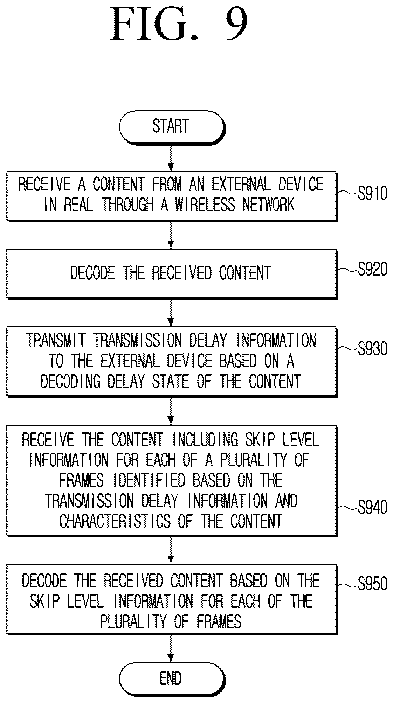

FIG. 9 is a flow chart for illustrating a control method of the electronic device 200 according to one or more embodiments of the disclosure.

According to FIG. 9, the electronic device 200 may receive a content from the transmission device 100 in real time through a wireless network in operation S910. For example, a content may include at least one of a video content or an audio content. For example, the electronic device 200 may receive a compressed stream in a form wherein at least one of a video content or an audio content was compressed from the transmission device 100 in a streaming form.

Then, the electronic device 200 may decode the received content in operation S920. For example, the electronic device 200 may decode the received compressed stream by using the decoder. For example, the electronic device 200 may decode the received compressed stream based on compression information included in the header of the compressed stream. For example, the electronic device 200 may obtain a frame by decoding each compressed packet based on the compression information included in the header of each compressed packet included in the received compressed stream. For example, in a header area of a compressed image packet corresponding to each of a plurality of image frames, compression information such as an image size, an image compression rate, etc. may be included.

Then, the electronic device 200 may transmit transmission delay information to the transmission device 100 based on the decoding delay state of the content in operation S930. For example, the transmission delay information is information on delays according to degradation of a wireless network, and it may include the number of delayed frames. For example, the number of delayed frames may include at least one of the number of audio delayed frames or the number of video delayed frames. However, the disclosure is not limited thereto, and the transmission delay information may be level information wherein the number of delayed frames has become graded. That is, the transmission delay information may be information in various forms that can indicate a low-delay request of a content.

Then, the electronic device 200 may receive a content including skip level information for each of the plurality of frames in operation S940. For example, the skip level information for each of the plurality of frames may be information that was identified based on the characteristics of the content and the transmission delay information received from the transmission device 100. For example, the content characteristics may vary according to whether the content is an audio content or a video content. For example, in the case of an audio content, the content characteristics may include at least one of data continuity, a content type, or a sound size. Also, in the case of a video content, the content characteristics may include at least one of a scene change, a content type, a motion size, or a framerate.

Then, the electronic device 200 may decode the received content based on the skip level information for each of the plurality of frames in operation S950. For example, the skip levels for each of the plurality of frames may be information indicating whether the frames can be skipped at the time of decoding, and may be included in the header areas of the compression packets corresponding to each frame. For example, in case a skip level has a value of "1" if a frame can be skipped, and has a value of "0" if a frame cannot be skipped, the electronic device 200 may perform content decoding by skipping the frame of which skip level is "1."

Meanwhile, in FIG. 9, orders were mapped for all steps for the convenience of explanation, but it is obvious that the orders of steps that are regardless of orders or that can be performed in parallel are not necessarily limited to the orders.

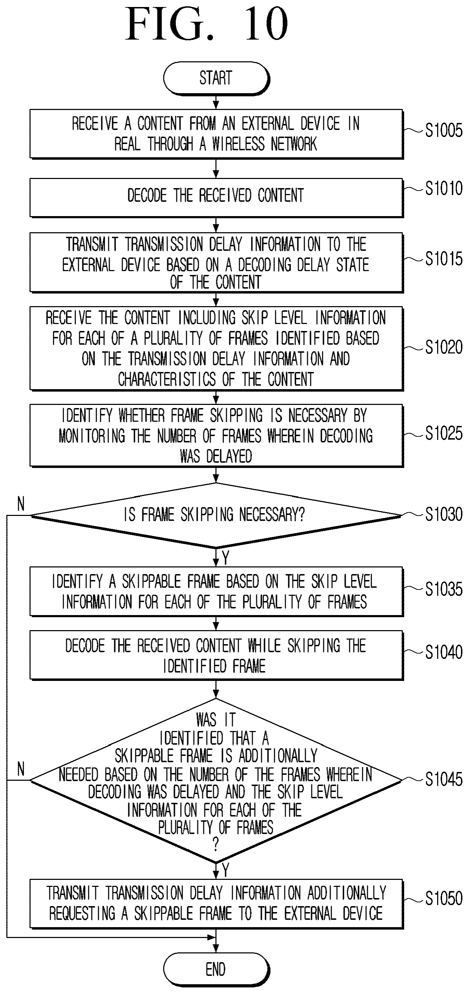

FIG. 10 is a flow chart for illustrating a control method of the electronic device 200 according to one or more embodiments of the disclosure.

Among the operations illustrated in FIG. 10, regarding operations that overlap with the operations illustrated in FIG. 9, detailed explanation will be omitted.

According to FIG. 10, the electronic device 200 may receive a content from the transmission device 100 in real time through a wireless network in operation S1005.

Then, the electronic device 200 may decode the received content in operation S1010.

Then, the electronic device 200 may transmit transmission delay information to the transmission device 100 based on a decoding delay state of the content in operation S1015.

Then, the electronic device 200 may receive a content including skip level information for each of a plurality of frames in operation S1020.

Then, the electronic device 200 may identify whether frame skipping is necessary by monitoring the number of frames wherein decoding was delayed in operation S1025. If it is identified that frame skipping is necessary in operation S1030:Y, the electronic device 200 may identify a skippable frame based on the skip level information for each of the plurality of frames in operation S1035.

Then, the electronic device 200 may decode the received content by skipping the identified frame in operation S1040. For example, in case a skip level has a value of "1" if a frame can be skipped, and has a value of "0" if a frame cannot be skipped, the electronic device 200 may perform content decoding by skipping the frame of which skip level is "1."

Then, the electronic device 200 may identify whether a skippable frame is additionally needed based on the number of frames wherein decoding was delayed and the skip level information for each of the plurality of frames in operation S1045. If it is identified that a skippable frame is additionally needed in operation S1045:Y, the electronic device 200 may transmit transmission delay information additionally requesting a skippable frame to the transmission device 100 in operation S1050. For example, the electronic device 200 may compare the number of frames wherein decoding was delayed and skippable frames in real time, and in case the number of the frames wherein decoding was delayed is bigger than the number of the skippable frames, the electronic device 200 may transmit transmission delay information additionally requesting a skippable frame to the transmission device 100.

Meanwhile, in FIG. 10, orders were mapped for all steps for the convenience of explanation, but it is obvious that the orders of steps that are regardless of orders or that can be performed in parallel are not necessarily limited to the orders.

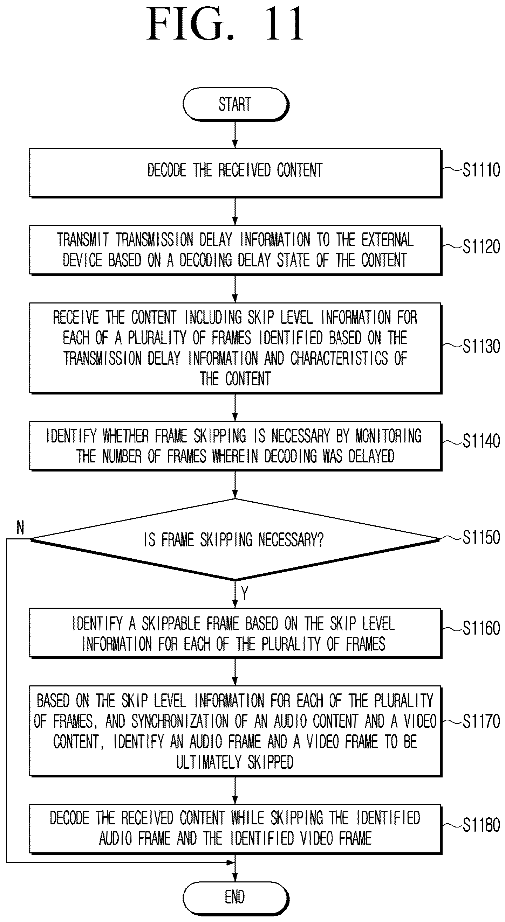

FIG. 11 is a flow chart for illustrating a control method of the electronic device 200 according to one or more embodiments of the disclosure.

Among the operations illustrated in FIG. 11, regarding operations that overlap with the operations illustrated in FIG. 9 and FIG. 10, detailed explanation will be omitted.

According to FIG. 10, the electronic device 200 may receive a content from the transmission device 100 in real time through a wireless network, and decode the received content in operation S1010. For example, the electronic device 200 may receive a compressed stream including both of a video content and an audio content.

Then, the electronic device 200 may transmit transmission delay information to the transmission device 100 based on the decoding delay state of the content in operation S1120. For example, the electronic device 200 may transmit transmission delay information including the number of video delayed frames and the number audio delayed frames to the transmission device 100.

Then, the electronic device 200 may receive a content including skip level information for each of a plurality of frames in operation S1130. For example, the electronic device 200 may receive a content including skip level information for each video frame and skip level information for each audio frame.

Then, the electronic device 200 may identify whether frame skipping is necessary by monitoring the number of frames wherein decoding was delayed in operation S1140. If it is identified that frame skipping is necessary in operation S1150:Y, the electronic device 200 may identify skippable frames based on the skip level information for each of the plurality of frames in operation S1160. For example, the electronic device 200 may identify skippable video frames based on the skip level information for each video frame, and identify skippable audio frames based on the skip level information for each audio frame.

Then, the electronic device may identify an audio frame and a video frame to be ultimately skipped based on the skip level information for each of the plurality of frames, and synchronization of the audio content and the video content in operation S1170. For example, the electronic device 200 should skip a video frame and an audio frame such that synchronization of the audio frame and the video frame is possible. Accordingly, the electronic device 200 may identify that an audio frame and a video frame can be ultimately skipped only in case both of the synchronized audio frame and video frame can be skipped.

Then, the electronic device 200 may decode the received content by skipping the identified audio frame and the identified video frame in operation S1180.

Meanwhile, in FIG. 11, orders were mapped for all steps for the convenience of explanation, but it is obvious that the orders of steps that are regardless of orders or that can be performed in parallel are not necessarily limited to the orders.

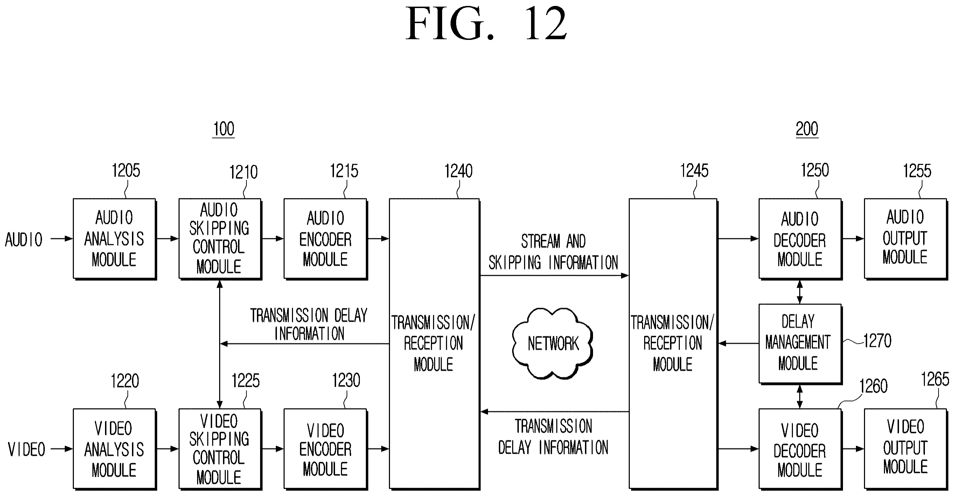

FIG. 12 is a diagram for illustrating an operation between the transmission device 100 and the reception device 200 according to one or more embodiments of the disclosure.

According to FIG. 12, the transmission device 100 and the reception device 200 may perform communication through a wireless network. According to one or more embodiments, the transmission device 100 may be implemented as the electronic device 100 illustrated in FIG. 2, and the reception device 200 may be implemented as the electronic devices 200, 200' illustrated in FIG. 8A and FIG. 8B.

According to one or more embodiments, the transmission device 810 may include an audio analysis module 1205, an audio skipping control module 1210, an audio encoder module 1215, a video analysis module 1220, a video skipping control module 1225, a video encoder module 1230, and a transmission/reception module 1240. Here, each module may be implemented as at least one software, at least one hardware, and/or a combination of them. For example, at least one of the audio analysis module 1205, the audio skipping control module 1210, the audio encoder module 1215, the video analysis module 1220, the video skipping control module 1225, the video encoder module 1230, or the transmission/reception module 1240 may be implemented to use a predefined algorithm, a predefined formula, and/or a trained artificial intelligence model. The audio analysis module 1205, the audio skipping control module 1210, the audio encoder 1215, the video analysis module 1220, the video skipping control module 1225, the video encoder module 1230, and the transmission/reception module 1240 may be included inside the transmission device 100, but may also be dispersed in at least one external device according to one or more embodiments.

According to one or more embodiments, the reception device 200 may include a transmission/reception module 1245, an audio decoder module 1250, an audio output module 1255, a video decoder module 1260, a video output module 1265, and a delay management module 1270. Here, each module may be implemented as at least one software, at least one hardware, and/or a combination of them. For example, at least one of the transmission/reception module 1245, the audio decoder module 1250, the audio output module 1255, the video decoder module 1260, the video output module 1265, or the delay management module 1270 may be implemented to use a predefined algorithm, a predefined formula, and/or a trained artificial intelligence model. The transmission/reception module 1245, the audio decoder module 1250, the audio output module 1255, the video decoder module 1260, the video output module 1265, and the delay management module 1270 may be included inside the reception device 200, but may also be dispersed in at least one external device according to one or more embodiments.

According to one or more embodiments, the transmission device 100 may analyze an audio content by using the audio analysis module 1205. For example, the audio analysis module 1205 may analyze at least one of data continuity, a content type, or a sound size. Here, a content type may indicate not only a provision form of a content such as a real time streaming content and an OTT (a content type) content, but also a genre of a content such as a game content and a movie content.

According to one or more embodiments, the transmission device 100 may determine an audio encoding control option by using the audio skipping control module 1205. For example, the audio analysis module 1205 may identify whether each audio frame can be skipped based on the transmission delay information transmitted from the transmission/reception module 270 and the analysis result of the audio analysis module 1205.

According to one or more embodiments, the transmission device 100 may encode an audio content by using the audio encoder module 1215. For example, the audio encoder module 1215 may generate a plurality of compressed audio packets by performing compression for each audio frame. In this case, in the header areas of the plurality of audio compressed packets, compression information and skip level information may be included.

According to one or more embodiments, the transmission device 100 may analyze a video content by using the video analysis module 1220. For example, the video analysis module 1220 may analyze at least one of a scene change, a content type, a motion size, or a framerate. Here, a content type may indicate not only a provision form of a content such as a real time streaming content and an OTT (a content type) content, but also a genre of a content such as a game content and a movie content.

According to one or more embodiments, the transmission device 100 may determine a video encoding control option by using the video skipping control module 1225. For example, the video skipping control module 1225 may identify whether each video frame can be skipped based on the transmission delay information transmitted from the transmission/reception module 270 and the analysis result of the video analysis module 1220.

According to one or more embodiments, the transmission device 100 may encode a video content by using the video encoder module 1230. For example, the video encoder module 1230 may generate a plurality of compressed video packets by performing compression for each video frame. In this case, in the header areas of the plurality of video compressed packets, compression information and skip level information may be included.

According to one or more embodiments, the transmission device 100 may transmit a compressed stream to the reception device 200 by using the transmission/reception module 1245. For example, the transmission/reception module 1270 may transmit a compressed stream including an encoded audio stream and an encoded video stream to the reception device 200. Also, the transmission device 100 may transmit the transmission delay information received from the reception device 200 to the audio skipping control module 1210 and the video skipping control module 1225 by using the transmission/reception module 1245.

According to one or more embodiments, the reception device 200 may receive a compressed stream from the transmission device 100 by using the transmission/reception module 1245. According to one or more embodiments, the compressed stream may include an encoded audio stream and an encoded video stream.

According to one or more embodiments, the reception device 200 may decode an audio stream by using the audio decoder module 1250. For example, the audio decoder module 1250 may decode an audio stream by skipping an audio frame in a necessary case based on the transmission delay information received from the delay management module 1270. For example, the audio decoder module 1250 may decode an audio stream by skipping an audio frame in a necessary case based on skip levels corresponding to each audio frame.

According to one or more embodiments, the reception device 200 may output a decoded audio content by using the audio output module 1255. For example, the audio output module 1255 may output an audio content through the speaker 270.

According to one or more embodiments, the reception device 200 may decode a video stream by using the video decoder module 1260. For example, the video decoder module 1260 may decode a video stream by skipping a video frame in a necessary case based on the transmission delay information received from the delay management module 1270. For example, the video decoder module 1260 may decode a video stream by skipping a video frame in a necessary case based on skip levels corresponding to each video. According to one or more embodiments, the video decoder module 1260 may decode frames included in an encoding content in decoding block units. However, the disclosure is not limited thereto, and the video decoder module 1260 may decode frames included in an encoding content in decoding line units.

According to one or more embodiments, the reception device 200 may output a decoded video content by using the video output module 1265. For example, the video output module 1265 may output a video content through the display 240.

According to one or more embodiments, the reception device 200 may monitor a decoding delay situation of the audio decoder module 1250 and the video decoder module 1260 by using the delay management module 1270, and generate transmission delay information based on the monitoring result. Also, the reception device 200 may transmit the transmission delay information generated by using the delay management module 1270 to the audio decoder module 1250, the video decoder module 1260, and the transmission/reception module 1245. In this case, the transmission/reception module 1245 may transmit the transmission delay information to the transmission device 100.

According to one or more embodiments, the reception device 200 may manage synchronization (or sync matching) of an audio frame and a video frame according to decoding skipping of the audio frame and the video frame by using the delay management module 1270. For example, if skippable audio frames and video frames are identified according to the skip levels, the delay management module 1270 may determine an audio frame and a video frame that are ultimately skipped such that a corresponding audio frame and a corresponding video frame are synchronized and output.

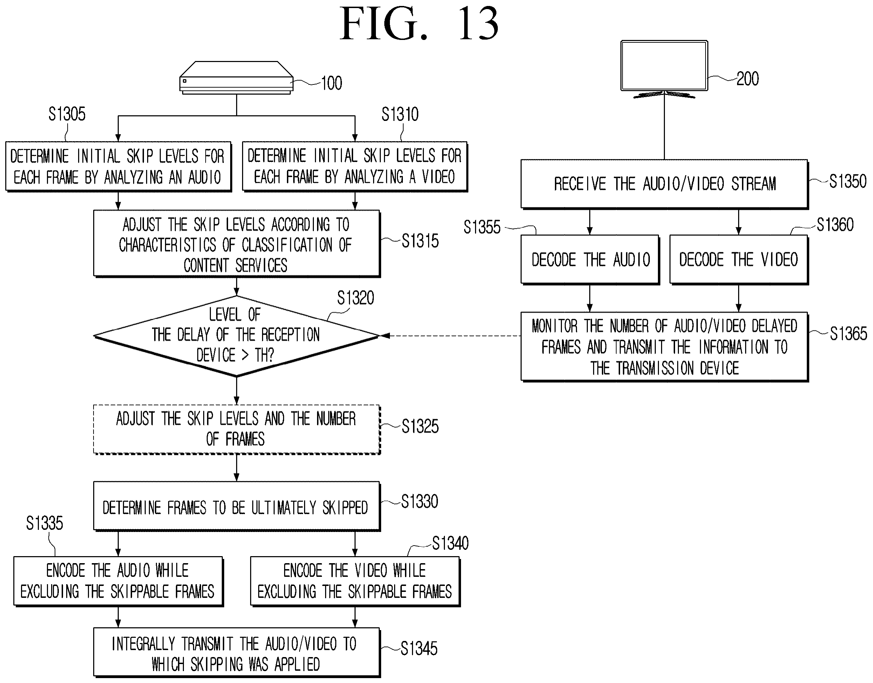

FIG. 13 is a diagram for illustrating an operation in a unicast mode according to one or more embodiments of the disclosure.

According to one or more embodiments, in case the transmission device 100 and the reception device 200 are in a 1:1 transmission and reception mode (e.g., a unicast mode), the transmission device 100 may encode a content while skipping skippable frames based on identified skip levels for each of a plurality of frames.

According to FIG. 13, the transmission device 100 may determine initial skip levels for each frame by analyzing an audio content in operation S1305. Also, the transmission device 100 may determine initial skip levels for each frame by analyzing a video content in operation S1310. For example, the transmission device 100 may determine initial skip levels for each frame based on at least one of data continuity or a sound size.

Then, the transmission device 100 may adjust skip levels according to characteristics of classification of content services in operation S1315. For example, the transmission device 100 may adjust skip levels for each frame based on not only a provision form of a content such as a real time streaming content and an OTT (a content type) content, but also a genre of a content such as a game content and a movie content. In this case, the transmission device 100 may adjust skip levels for each frame by securing the maximum number of skippable frames.

Then, the transmission device 100 may identify whether the delay level is greater than or equal to a threshold level based on the transmission delay information received from the reception device 200 in operation S1320. For example, the transmission device 100 may identify whether the number of frames wherein decoding was delayed included in the transmission delay information is greater than or equal to a threshold number. For example, the threshold number may be determined as a different value according to not only a provision form of a content such as a real time streaming content and an OTT (a content type) content, but also a genre of a content such as a game content and a movie content.

In case the delay level is greater than or equal to the threshold level based on the transmission delay information, the transmission device 100 may adjust the skip levels for each frame and the number of frames in operation S1325.

Then, the transmission device 100 may determine an ultimately skipped frame in consideration of audio and video synchronization in operation S1330.

Then, the transmission device 100 may encode the audio content while excluding an audio frame that was determined as an ultimately skipped frame in operation S1335. Also, the transmission device 100 may encode the video content while excluding a video frame that was determined as an ultimately skipped frame in operation S1340.

Then, the transmission device 100 may transmit a compressed stream including the audio content and the video content that were encoded while skipping was applied to the reception device 200 in operation S1345.

Meanwhile, the reception device 200 may receive the compressed stream including the encoded audio content and video content from the transmission device 100 in operation S1350.

The reception device 200 may decode the audio content and the video content in operations S1355 and S1360. In this case, the reception device 200 may generate transmission delay information by monitoring the number of frames wherein decoding was delayed of the audio content and the video content, and transmit the transmission delay information to the transmission device 100.

According to what was described above, in case the current streaming mode is a unicast mode, the transmission device 100 may perform encoding by directly performing frame skipping based on the number of frames wherein decoding was delayed included in the transmission delay information. Accordingly, the transmission amount can be reduced, and the task of the decoder can also be reduced.

Meanwhile, in FIG. 13, orders were mapped for all steps for the convenience of explanation, but it is obvious that the orders of steps that are regardless of orders or that can be performed in parallel are not necessarily limited to the orders.

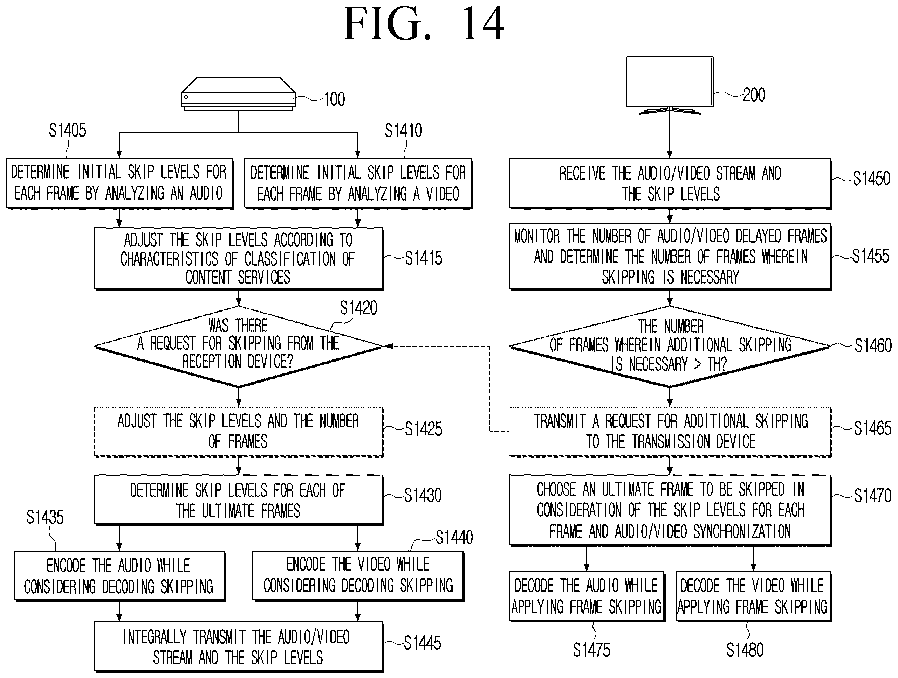

FIG. 14 is a diagram for illustrating an operation in a multicast mode according to one or more embodiments of the disclosure.

According to one or more embodiments, in case the transmission device 100 and the reception device 200 are in a 1:N transmission and reception mode (e.g., a multicast mode/a broadcast mode), the transmission device 100 may encode a content such that skippable frames can be skipped at the time of decoding at the reception device 200 based on identified skip levels for each of a plurality of frames.

According to FIG. 14, the transmission device 100 may determine initial skip levels for each frame by analyzing an audio content in operation S1405. Also, the transmission device 100 may determine initial skip levels for each frame by analyzing a video content in operation S1410. For example, the transmission device 100 may determine initial skip levels for each frame based on at least one of data continuity or a sound size.

Then, the transmission device 100 may adjust skip levels according to characteristics of classification of content services in operation S1415. For example, the transmission device 100 may adjust skip levels for each frame based on not only a provision form of a content such as a real time streaming content and an OTT (a content type) content, but also a genre of a content such as a game content and a movie content. In this case, the transmission device 100 may adjust skip levels for each frame by securing the maximum number of skippable frames.

Then, the transmission device 100 may identify whether there is a request for frame skipping from the reception device 200 in operation S1420.

In case there is a request for frame skipping from the reception device 200, the transmission device 100 may adjust the skip levels and the number of frames based on the request for frame skipping in operation S1425. For example, the transmission device 100 may set the skip levels for each frame such that the frames as many as the number of the delayed frames included in the request for frame skipping can be skipped at the decoder.

Then, the transmission device 100 may determine the ultimate skip levels for each frame in operation S1430.

Then, the transmission device 100 may encode the audio content by considering the skipped frames at the time of decoding in operation S1435. Also, the transmission device 100 may encode the video content by considering the skipped frames at the time of decoding in operation S1440. For example, the transmission device 100 may encode the video content such that the skippable frames at the time of decoding are excluded from the reference frame.

Then, the transmission device 100 may transmit a compressed stream including the encoded audio content and video content to the reception device 200 in operation S1445. In this case, the compressed stream may include skip level information for each frame.

Meanwhile, the reception device 200 may receive the compressed stream including the encoded audio content and video content from the transmission device 100 in operation S1450. Then, the reception device 200 may decode the audio content and the video content.

The reception device 200 may identify the number of frames wherein decoding skipping is necessary by monitoring the decoding situation of the audio content and the video content in operation S1455.

Then, the reception device 200 may identify whether the number of frames wherein skipping is necessary is greater than or equal to the threshold number in operation S1460.

If the number of frames wherein skipping is necessary is greater than or equal to the threshold number, the reception device 200 may transmit an additional request for skipping to the transmission device 100 in operation S1465.

Then, the reception device 200 may identify an ultimate frame to be skipped in consideration of the skip levels for each frame and audio/video synchronization in operation S1470.

Then, the reception device 200 may decode the audio content and the video content by skipping some frames based on the skip levels in operations S1474 and S1480.

According to what was described above, in case the current streaming mode is a multicast mode, the transmission device 100 may transmit skip levels for each frame, and can thereby perform delay-restored reproduction that fits the local situation at the reception device 200.

Meanwhile, in FIG. 14, orders were mapped for all steps for the convenience of explanation, but it is obvious that the orders of steps that are regardless of orders or that can be performed in parallel are not necessarily limited to the orders.

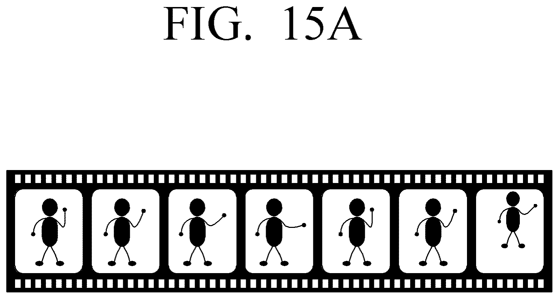

FIG. 15A to FIG. 15D are diagrams for illustrating a method of identifying a compression mode according to one or more embodiments of the disclosure.

According to one or more embodiments, the transmission device 100 may identify whether to compress frames after generation of frame skipping in an intra mode, or compress the frames in an inter mode of referring only to frames that are not skipped frames in consideration of the image quality and the coding efficiency.

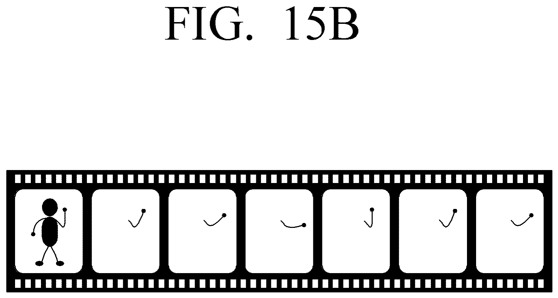

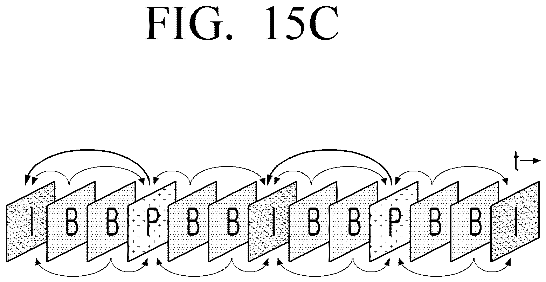

For example, if it is identified that the encoding mode is the intra mode, the transmission device 100 may perform intra coding, and if it is identified that the encoding mode is the inter mode, the transmission device 100 may perform inter coding by referring only to frames excluding frames to be skipped. Here, the intra coding means a method of performing compression individually for each frame as illustrated in FIG. 15A, and the inter coding means a method of compressing several frames at once by using similarity among adjacent frames as illustrated in FIG. 15B. An image compressed according to the inter coding may include an inter frame as illustrated in FIG. 15C, and the inter frame may have compressed information that is one frame or more, and may mean a bidirectional predictive frame (B frame) and a predictive frame (P frame) excluding an inter frame (I frame). For example, if it is assumed that the frames illustrated in FIG. 15C constitute one GOP, the I frame and the P frame may be processed first at the time of decoding, and then the B frame in between may be processed. Accordingly, the transmission device 100 may perform encoding such that the B frame is skipped preferentially in one GOP. Also, the transmission device 100 may perform encoding processing by placing priorities in the order of the I frame> the P frame > the B frame among different GOPs.

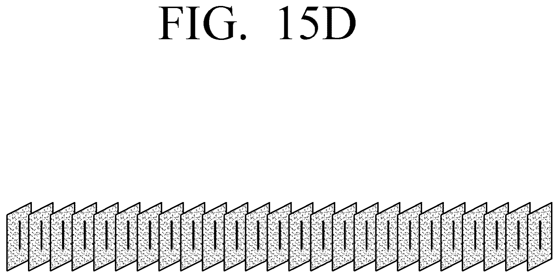

In contrast, in the intra mode, each frame is individually compressed as an intra frame as illustrated in FIG. 15D, and thus any frame can be skipped. Accordingly, intra coding can be performed regardless of a frame to be skipped.

According to the aforementioned various embodiments, in a low-delay streaming service such as real time streaming, transmission delays can be minimized while the quality is maintained according to the network state and the content characteristics. Also, when a delay occurs, a minimum delay situation can be restored within the quickest time possible, and accumulation of delays can be prevented, and viewing quality optimized for the specification of the user display can be provided.

Meanwhile, methods according to the aforementioned various embodiments of the disclosure may be implemented just with software upgrade, or hardware upgrade for a conventional electronic device.

Also, the aforementioned various embodiments of the disclosure may also be performed through an embedded server provided on an electronic device, or an external server of an electronic device.

Meanwhile, the methods according to the aforementioned various embodiments of the disclosure may be implemented in forms of applications that can be installed on conventional electronic devices. Alternatively, the methods according to the aforementioned various embodiments of the disclosure may be performed by using an artificial neural network based on deep learning (or a deep artificial neural network), i.e., a learning network model. According to one or more embodiments, at least one of downscaling, decoding, encoding, or upscaling may be performed through a trained neural network model.

Meanwhile, according to one or more embodiments of the disclosure, the aforementioned various embodiments may be implemented as software including instructions that can be stored in machine-readable storage media, which can be read by machines (e.g.: computers). The machines refer to devices that call instructions stored in a storage medium, and can operate according to the called instructions, and the devices may include an electronic device (e.g.: an electronic device A) according to the embodiments disclosed herein. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to one or more embodiments of the disclosure, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g.: a compact disc read only memory (CD-ROM)), or through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g.: a module or a program) may consist of a singular object or a plurality of objects. Also, among the aforementioned corresponding sub components, some sub components may be omitted, or other sub components may be further included in the various embodiments. Alternatively or additionally, some components (e.g.: a module or a program) may be integrated as an object, and perform the functions that were performed by each of the components before integration identically or in a similar manner. Operations performed by a module, a program, or other components according to the various embodiments may be executed sequentially, in parallel, repetitively, or heuristically. Or, at least some of the operations may be executed in a different order or omitted, or other operations may be added.

While the content of the disclosure was illustrated and described in detail with reference to the embodiments, it should be understood that various modifications of forms and details can be made without departing from the idea and the scope of the appended claims.

## Claims

1. An electronic device comprising:
a communication interface connectable with a wireless network;
a memory storing at least one instruction; and
at least one processor configured to, by executing the at least one instruction:
transmit a content to an external device in real time through the wireless network via the communication interface,
based on transmission delay information received from the external device and characteristics of the content, identify skip levels for each of a plurality of frames included in the content,
encode the content based on the identified skip levels for each of the plurality of frames, and
transmit skip level information for each of the plurality of frames and the encoded content to the external device through the wireless network via the communication interface.

2. The electronic device of claim 1, wherein the at least one processor is configured to, by executing the at least one instruction:
based on identifying a skippable frame among the plurality of frames included in the content, encode the content such that the identified skippable frame is skippable at a time of decoding at the external device, and
transmit the encoded content, with the skip level information included in an area of each of the plurality of frames, to the external device through the wireless network via the communication interface.

3. The electronic device of claim 2,
wherein the at least one processor is configured to, by executing the at least one instruction:
based on identifying a skippable frame among the plurality of frames included in the content, encode the content while excluding the identified skippable frame from a reference frame.

4. The electronic device of claim 1,
wherein the at least one processor is configured to, by executing the at least one instruction:
based on the content being an audio content, identify the skip levels for each of the plurality of frames based on at least one of data continuity, a content type, or a sound size, and
based on the content being a video content, identify the skip levels for each of the plurality of frames based on at least one of a scene change, a content type, a motion size, or a framerate.

5. The electronic device of claim 1,
wherein the at least one processor is configured to, by executing the at least one instruction:
based on identifying that the content is a first type content, identify the skip levels for each of the plurality of frames such that a number of skippable frames becomes greater than or equal to a threshold number, and
based on identifying that the content is a second type content, identify the skip levels for each of the plurality of frames such that the number of skippable frames becomes smaller than the threshold number

6. The electronic device of claim 1,
wherein the at least one processor is configured to, by executing the at least one instruction:
based on the electronic device and the external device being in a situation of 1:1 transmission and reception, encode the content while skipping skippable frames based on the identified skip levels for each of the plurality of frames, and
based on the electronic device and the external device being in a situation of 1:N transmission and reception, wherein N is greater than 1, encode the content such that skippable frames are skippable at a time of decoding at the external device based on the identified skip levels for each of the plurality of frames.

7. An electronic device comprising:
a communication interface connectable with a wireless network;
a memory storing at least one instruction; and
at least one processor configured to, by executing the at least one instruction:
receive a content from an external device in real time through the wireless network via the communication interface;
decode the received content,
transmit transmission delay information to the external device based on a decoding delay state of the received content, and
based on receiving, through the wireless network via the communication interface, the content including skip level information for each of a plurality of frames identified based on the transmitted transmission delay information and characteristics of the content, decode the received content including the skip level information for each of the plurality of frames based on the identified skip level information for each of the plurality of frames.

8. The electronic device of claim 7,
wherein the at least one processor is configured to, by executing the at least one instruction:
identify whether frame skipping is necessary by monitoring a number of frames where decoding was delayed, and
based on determining that frame skipping is needed, identify a skippable frame based on the skip level information for each of the plurality of frames, and decode the received content including the skip level information for each of the plurality of frames while skipping the identified skippable frame.

9. The electronic device of claim 8,
wherein the at least one processor is configured to, by executing the at least one instruction:
based on identifying that a skippable frame is additionally needed based on a number of the frames where decoding was delayed and the skip level information for each of the plurality of frames, transmit transmission delay information additionally requesting a skippable frame to the external device.

10. The electronic device of claim 7,
wherein the at least one processor is configured to, by executing the at least one instruction:
based on the skip level information for each of the plurality of frames, and synchronization of an audio content and a video content, identify an audio frame and a video frame to be ultimately skipped, and
decode the received content including the skip level information for each of the plurality of frames while skipping the identified audio frame and the identified video frame.

11. A control method of an electronic device, the control method comprising:
transmitting a content to an external device in real time through a wireless network;
based on transmission delay information received from the external device and characteristics of the content, identifying skip levels for each of a plurality of frames included in the content;
encoding the content based on the identified skip levels for each of the plurality of frames; and
transmitting the skip level information for each of the plurality of frames and the encoded content to the external device through the wireless network.

12. The control method of claim 11,
wherein the encoding the content comprises:
based on identifying a skippable frame among the plurality of frames included in the content, encoding the content such that the identified skippable frame is skippable at a time of decoding at the external device, and
the transmitting the skip level information for each of the plurality of frames and the encoded content to the external device comprises:
transmitting the encoded content wherein the skip level information is included in an area of each of the plurality of frames to the external device.

13. The control method of claim 12,
wherein the encoding the content comprises:
based on identifying a skippable frame among the plurality of frames included in the content, encoding the content while excluding the identified skippable frame from a reference frame.

14. The control method of claim 11,
wherein the identifying the skip levels for each of the plurality of frames comprises:
based on the content being an audio content, identifying the skip levels for each of the plurality of frames based on at least one of data continuity, a content type, or a sound size; and
based on the content being a video content, identifying the skip levels for each of the plurality of frames based on at least one of a scene change, a content type, a motion size, or a framerate.

15. The control method of claim 11, wherein the identifying the skip levels for each of the plurality of frames comprises:
based on identifying that the content is a first type content, identifying the skip levels for each of the plurality of frames such that a number of skippable frames becomes greater than or equal to a threshold number, and
based on identifying that the content is a second type content, identifying the skip levels for each of the plurality of frames such that the number of skippable frames becomes smaller than the threshold number.
